# EUROPEAN PATENT APPLICATION

(11) **EP 4 811 804 A1**
(43) Date of publication of application: **23.09.2026**
(21) Application number: 24891443.4
(22) Date of filing: 13.11.2024
(51) Int. Cl.: H04N 23/60, G06T 17/05, G09B 29/00

(54) **THREE-DIMENSIONAL MODEL GENERATION DEVICE, THREE-DIMENSIONAL MODEL GENERATION METHOD, AND PROGRAM**

(30) Priority: 17.11.2023 JP 2023195937
(71) Applicant: Panasonic Intellectual Property Management Co., Ltd., Kadoma-shi, Osaka 571-0057 (JP)
(72) Inventor: TERANISHI, Kensho, Kadoma-shi, Osaka 571-0057 (JP); ITO, Takafumi, Kadoma-shi, Osaka 571-0057 (JP)
(74) Representative: Grünecker Patent- und Rechtsanwälte PartG mbB
(86) International application number: PCT/JP2024/040379
(87) International publication number: WO 2025/105407

(57) **Abstract**

A three-dimensional model generation device (102) includes memory (12) and circuitry (11) coupled to the memory (12). Using the memory (12), the circuitry (11): obtains a plurality of images that are consecutive (S201); generates, using the plurality of images, a three-dimensional model including a plurality of three-dimensional points each having position information (S202); determines whether to cause a display unit to display first information for instructing a first position and orientation for shooting a first image for performing correction of an accumulated error of the three-dimensional model (S203); and when determining to cause the display unit to display the first information (Yes in S203), causes the display unit to display the first information (S204).

## Description

### [Technical Field]

The present disclosure relates to a three-dimensional model generation device, a three-dimensional model generation method, and a program.

### [Background Art]

A method of detecting camera positions and orientations from a plurality of images using Simultaneous Localization And Mapping (SLAM) and generating a three-dimensional model is known. At this time, a method of reducing accumulated error using loop closing (also referred to as loop closure) is known (for example, see Patent Literature (PTL) 1 and Patent Literature (PTL) 2).

### [Citation List]

### [Patent Literature]

[PTL 1] Japanese Unexamined Patent Application Publication No. 2023-69019
[PTL 2] Japanese Unexamined Patent Application Publication No. 2017-111688

### [Summary of Invention]

### [Technical Problem]

In such a three-dimensional model generation device and three-dimensional model generation method, further improvement is desired. In view of this, the present disclosure provides a three-dimensional model generation device or a three-dimensional model generation method that is capable of achieving further improvement.

### [Solution to Problem]

A three-dimensional model generation device according to an aspect of the present disclosure includes memory and circuitry coupled to the memory. Using the memory, the circuitry: obtains a plurality of images that are consecutive; generates, using the plurality of images, a three-dimensional model including a plurality of three-dimensional points each having position information; determines whether to cause a display unit to display first information for instructing a first position and orientation for shooting a first image for performing correction of an accumulated error of the three-dimensional model; and when determining to cause the display unit to display the first information, causes the display unit to display the first information.

### [Advantageous Effects of Invention]

The present disclosure can provide a three-dimensional model generation device or a three-dimensional model generation method that is capable of achieving further improvement.

### [Brief Description of Drawings]

[FIG. 1]

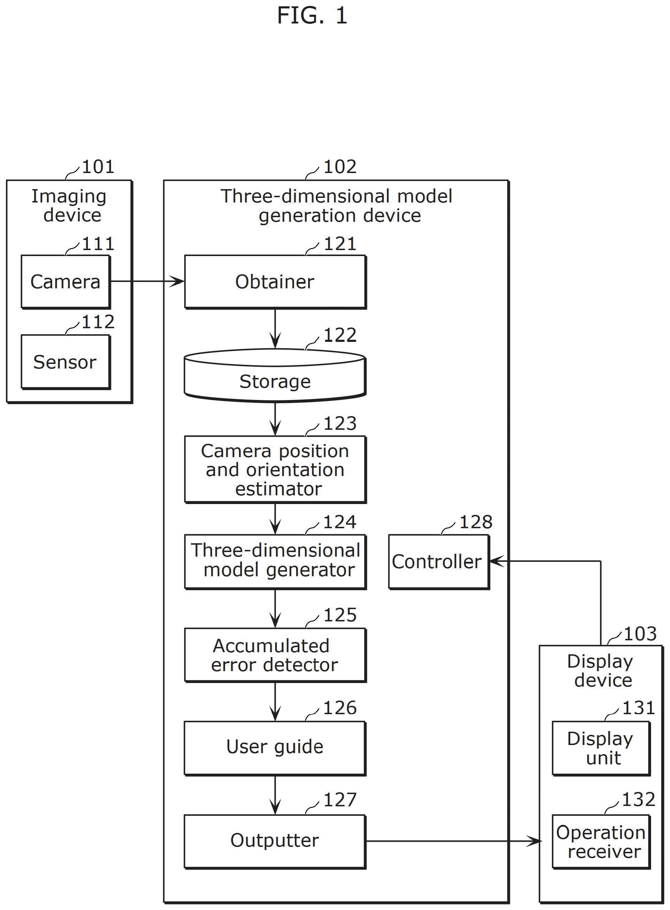

   FIG. 1 is a diagram illustrating a configuration of a three-dimensional model generation system according to an embodiment.
[FIG. 2]

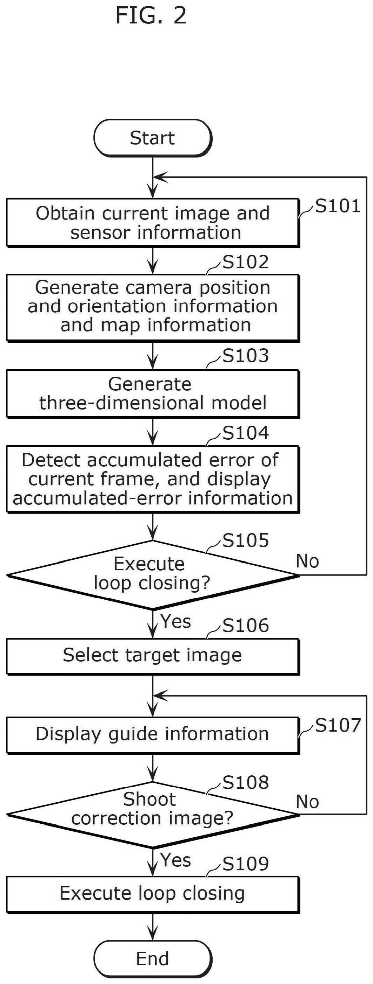

   FIG. 2 is a flowchart illustrating the operation of a three-dimensional model generation device according to the embodiment.
[FIG. 3]

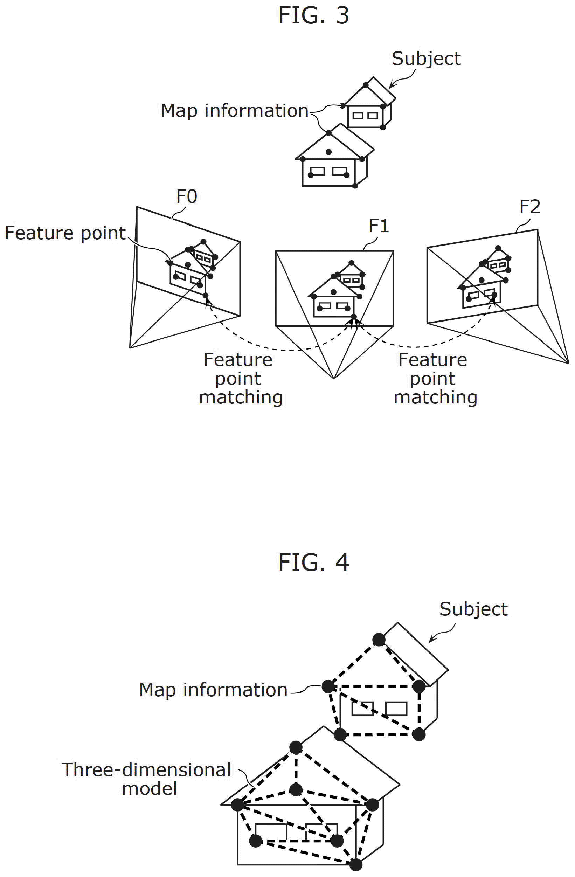

   FIG. 3 is a diagram for describing camera position and orientation estimation processing according to the embodiment.
[FIG. 4]
   FIG. 4 is a diagram for describing three-dimensional model generation processing according to the embodiment.
[FIG. 5]

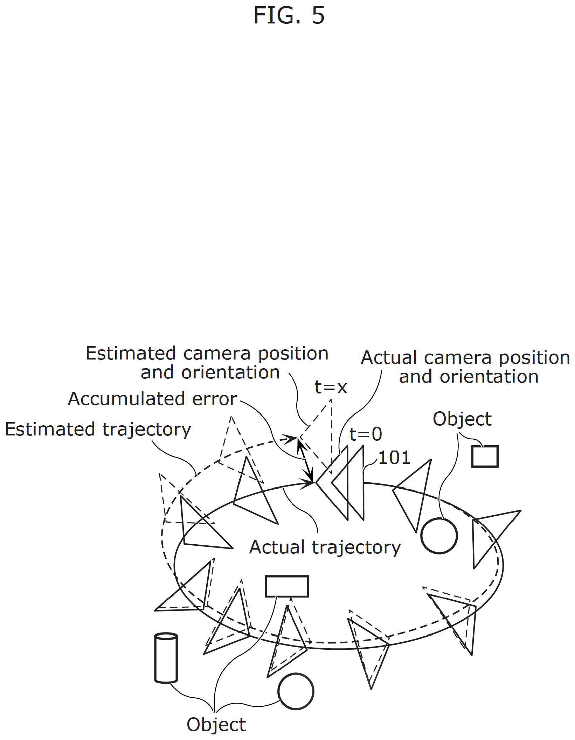

   FIG. 5 is a diagram for describing accumulated error according to the embodiment.
[FIG. 6]

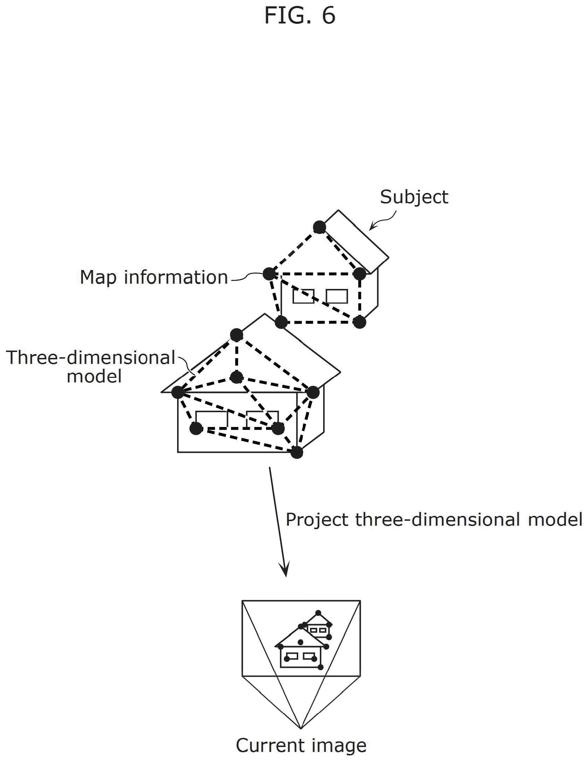

   FIG. 6 is a diagram for describing generation of accumulated-error information according to the embodiment.
[FIG. 7]

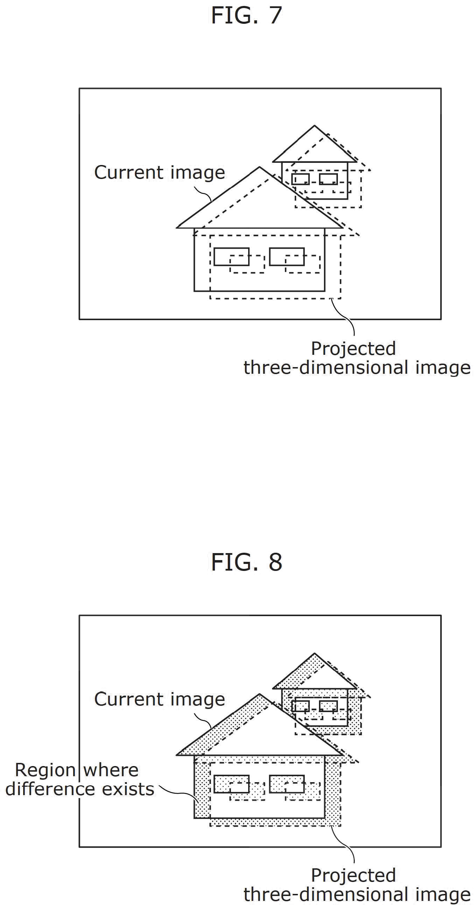

   FIG. 7 is a diagram illustrating an example display of accumulated-error information according to the embodiment.
[FIG. 8]
   FIG. 8 is a diagram illustrating an example display of accumulated-error information according to the embodiment.
[FIG. 9]

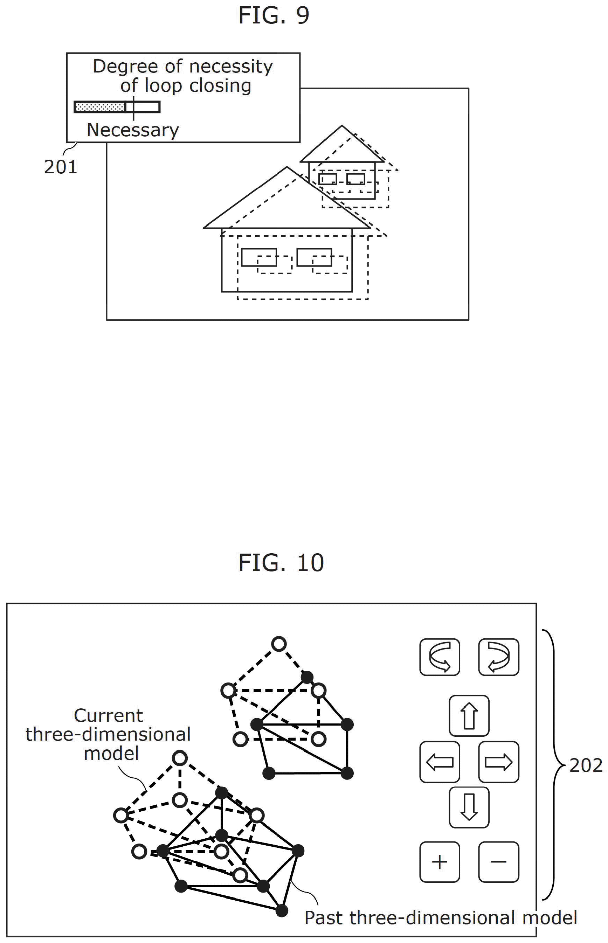

   FIG. 9 is a diagram illustrating an example display of accumulated-error information according to the embodiment.
[FIG. 10]
   FIG. 10 is a diagram illustrating an example display of accumulated-error information according to the embodiment.
[FIG. 11]

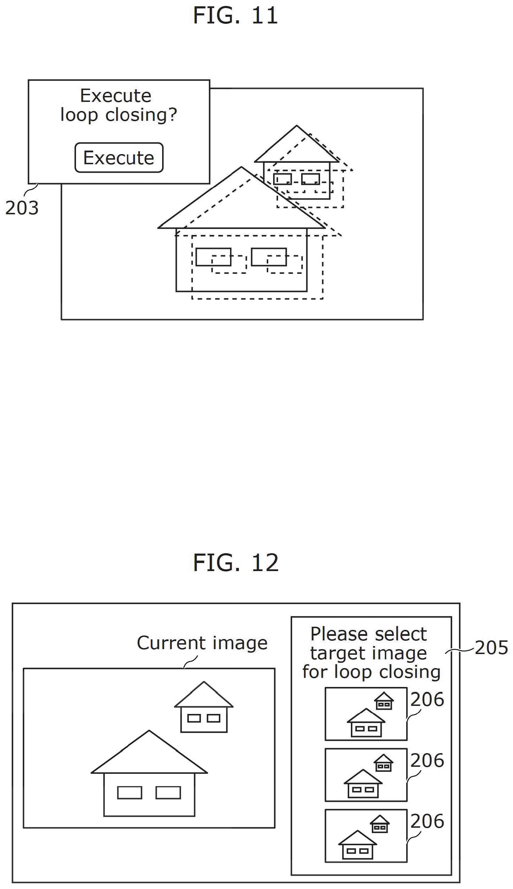

   FIG. 11 is a diagram illustrating an example display of a user interface according to the embodiment.
[FIG. 12]
   FIG. 12 is a diagram illustrating an example display of a user interface according to the embodiment.
[FIG. 13]

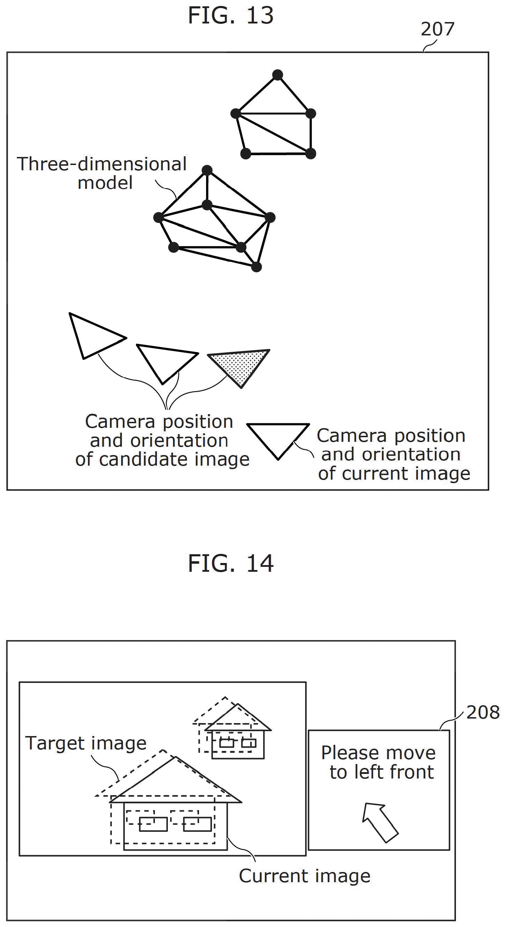

   FIG. 13 is a diagram illustrating an example display of a user interface according to the embodiment.
[FIG. 14]
   FIG. 14 is a diagram illustrating an example of guide information according to the embodiment.
[FIG. 15]

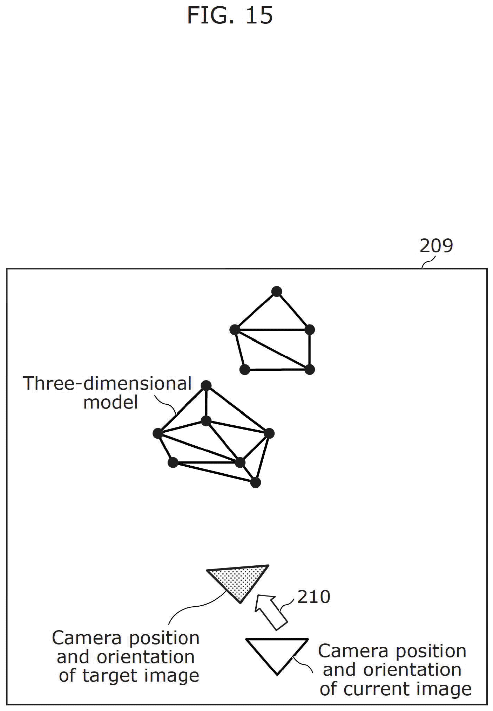

   FIG. 15 is a diagram illustrating an example of guide information according to the embodiment.
[FIG. 16]

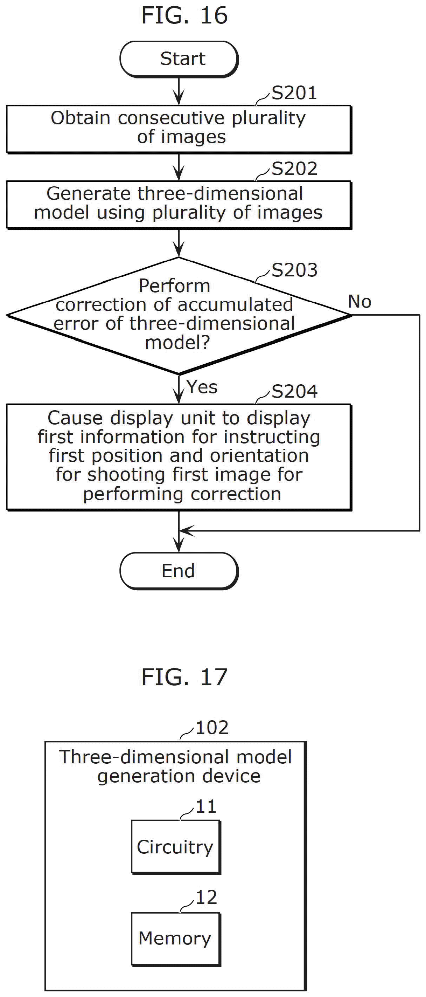

   FIG. 16 is a flowchart of three-dimensional model generation processing according to the embodiment.
[FIG. 17]
   FIG. 17 is a block diagram illustrating a hardware configuration of the three-dimensional model generation device according to the embodiment.

### [Description of Embodiments]

A three-dimensional model generation device according to an aspect of the present disclosure includes memory and circuitry coupled to the memory. Using the memory, the circuitry: obtains a plurality of images that are consecutive; generates, using the plurality of images, a three-dimensional model including a plurality of three-dimensional points each having position information; determines whether to cause a display unit to display first information for instructing a first position and orientation for shooting a first image for performing correction of an accumulated error of the three-dimensional model; and when determining to cause the display unit to display the first information, causes the display unit to display the first information.

Accordingly, the three-dimensional model generation device can support shooting of the first image for correcting the accumulated error. Therefore, accuracy of the generated three-dimensional model can be improved by appropriately performing the correction processing. In this manner, the three-dimensional model generation device can achieve further improvement.

For example, the first information may be a second image that is included in the plurality of images and shot at the first position and orientation.

Accordingly, the user can determine the first position and orientation while referring to the second image.

For example, the circuitry may cause the display unit to display the second image superimposed on a currently shot image.

Accordingly, the user can shoot the first image by shooting in a state in which the currently shot image matches the second image.

For example, the circuitry may further cause the display unit to display second information indicating the accumulated error.

Accordingly, the user can determine whether to perform the correction of the accumulated error, by referring to the second information.

For example, as the second information, the circuitry may cause the display unit to display, superimposed on a currently shot image, a third image obtained by viewing the three-dimensional model from a current position and orientation.

Accordingly, the user can recognize a difference between the currently shot image and the third image. Furthermore, the user can determine the necessity of the correction of the accumulated error, based on the difference.

For example, the circuitry may further cause the display unit to display, as the second information, a region having a difference between the third image and the currently shot image.

Accordingly, the user can determine the necessity of the correction of the accumulated error, based on the third information.

For example, the circuitry may further: calculate an amount of the accumulated error, based on a difference between the third image and the currently shot image; and cause the display unit to display third information indicating the amount calculated.

Accordingly, the user can recognize the magnitude (degree) of the difference between the currently shot image and the third image. Furthermore, the user can determine the necessity of the correction of the accumulated error, based on the magnitude of the difference.

For example, the circuitry may further: cause the display unit to display, together with the second information, a user interface for a user to instruct whether to perform the correction; and when an instruction to perform the correction is received, cause the display unit to display the first information.

Accordingly, the correction can be performed based on a determination by the user referring to the second information.

For example, the circuitry may further: cause the display unit to display a user interface for a user to select the second image from a plurality of fourth images included in the plurality of images.

Accordingly, the second image can be selected by the user.

For example, the circuitry may further: select the plurality of fourth images from the plurality of images, based on feature points included in each of the plurality of images.

Accordingly, the accuracy of feature point matching for the second image can be improved, and thus the accuracy of the correction of the accumulated error can be improved.

For example, the circuitry may further: select the second image from the plurality of images, based on feature points included in each of the plurality of images.

Accordingly, the accuracy of feature point matching for the second image can be improved, and thus the accuracy of the correction of the accumulated error can be improved.

For example, in a case where the first information is displayed on the display unit: (1) when the first image shot from the first position and orientation is obtained, the correction may be performed using the first image obtained; and (2) when a sixth image shot from a position and orientation of a fifth image shot at a position and orientation other than the first position and orientation, among the plurality of images, is obtained, the correction need not be performed using the sixth image obtained.

Accordingly, correction using an inappropriate image can be suppressed.

For example, the circuitry may: estimate, using the plurality of images, estimated positions and orientations that are positions and orientations at which the plurality of images were shot, and generates the three-dimensional model using the estimated positions and orientations; and in the correction, correct the accumulated error, based on an error between an estimated position and orientation of the first image and an estimated position and orientation of a second image that is included in the plurality of images and shot at the first position and orientation.

For example, the circuitry may cause the display unit to display, as the second information, a current three-dimensional model and a past three-dimensional model. The circuitry may further: receive an operation for aligning positions of the current three-dimensional model and the past three-dimensional model; and in the correction, perform the correction using, as auxiliary information, information obtained through the operation for aligning the positions.

Accordingly, it is possible to reduce the amount of processing for the correction of the accumulated error and improve accuracy.

A three-dimensional model generation method according to an aspect of the present disclosure includes: obtaining a plurality of images that are consecutive; generating, using the plurality of images, a three-dimensional model including a plurality of three-dimensional points each having position information; determining whether to cause a display unit to display first information for instructing a first position and orientation for shooting a first image for performing correction of an accumulated error of the three-dimensional model; and when determining to cause the display unit to display the first information, causing the display unit to display the first information.

Accordingly, the three-dimensional model generation method can support shooting of an image for correcting accumulated error. Therefore, accuracy of the generated three-dimensional model can be improved by appropriately performing the correction processing. In this manner, the three-dimensional model generation method can achieve further improvement.

Furthermore, a program according to an aspect of the present disclosure is a program for causing a computer to execute the three-dimensional model generation method.

It is to be noted that these general or specific aspects may be implemented as a system, a method, an integrated circuit, a computer program, or a computer-readable recording medium such as a CD-ROM, or may be implemented as any combination of a system, a method, an integrated circuit, a computer program, and a recording medium.

Hereinafter, embodiments will be described in detail with reference to the drawings as appropriate. However, unnecessarily detailed description may be omitted. For example, detailed description of well-known matters and redundant description of substantially identical configurations may be omitted. This is to avoid the following description from becoming unnecessarily redundant and to facilitate understanding by those skilled in the art.

It should be noted that the inventors provide the accompanying drawings and the following description in order for those skilled in the art to sufficiently understand the present disclosure, and do not intend for these to limit the subject matter set forth in the claims.

### [EMBODIMENT]

### [1. Configuration]

First, a configuration of a three-dimensional model generation system according to the present embodiment will be described. FIG. 1 is a block diagram illustrating the configuration of the three-dimensional model generation system according to the present embodiment. The three-dimensional model generation system is a system that generates a three-dimensional model from a plurality of images, and includes imaging device 101, three-dimensional model generation device 102, and display device 103.

Imaging device 101 generates a plurality of images and a plurality of items of sensor information, and outputs the generated plurality of images and plurality of items of sensor information to three-dimensional model generation device 102. Imaging device 101 includes camera 111 and sensor 112. Camera 111 shoots a subject (object) from different viewpoints (shooting positions and shooting directions), and outputs the obtained plurality of images (frames) to three-dimensional model generation device 102. For example, the plurality of images are shot by imaging device 101 shooting while being on the move.

Sensor 112 includes, for example, at least one of a distance sensor (depth sensor), a laser sensor (for example, LiDAR), or an inertial measurement unit (IMU). The IMU includes, for example, at least one of an accelerometer, an angular accelerometer, a gyro sensor, or the like. Sensor 112 outputs sensor information corresponding to each of the plurality of images to three-dimensional model generation device 102. Here, the sensor information includes, for example, at least one of a depth image obtained by the distance sensor, point cloud data obtained by the laser sensor, acceleration information obtained by the IMU, or the like. It should be noted that imaging device 101 need not include sensor 112.

Three-dimensional model generation device 102 generates a three-dimensional model using the plurality of images and the plurality of items of sensor information. Three-dimensional model generation device 102 includes obtainer 121, storage 122, camera position and orientation estimator 123, three-dimensional model generator 124, accumulated error detector 125, user guide 126, outputter 127, and controller 128.

Obtainer 121 obtains the plurality of images and the plurality of items of sensor information from imaging device 101. Storage 122 stores the plurality of images and the plurality of items of sensor information obtained by obtainer 121. Furthermore, storage 122 stores camera position and orientation information, map information, a three-dimensional model, and so on, which will be described later.

Camera position and orientation estimator 123 generates, using the plurality of images, camera position and orientation information indicating a position and an orientation (direction) of imaging device 101 at a time of shooting of each image. Here, the orientation of imaging device 101 indicates at least one of the shooting direction of imaging device 101 or the tilt of imaging device 101. The shooting direction of imaging device 101 is the direction of the optical axis of imaging device 101. The tilt of imaging device 101 is the rotation angle around the optical axis of imaging device 101 from a reference orientation.

Furthermore, camera position and orientation estimator 123 generates, together with the camera position and orientation information, map information indicating a three-dimensional point cloud indicating three-dimensional positions.

Three-dimensional model generator 124 generates a three-dimensional model of the subject based on the plurality of images, the camera position and orientation information, the map information, and the sensor information.

Accumulated error detector 125 detects accumulated error (also referred to as cumulative error) of the three-dimensional model, and generates accumulated-error information indicating the accumulated error. User guide 126 generates guide information that supports movement by a user to the shooting position of a correction image used in loop closing processing.

Outputter 127 outputs a current image, accumulated-error information, guide information, and so on, to display device 103. Controller 128 controls each processing unit. For example, controller 128 controls each processing unit in accordance with a user operation, and the like.

Display device 103 displays the current image, the accumulated-error information, the guide information, and so on, sent from three-dimensional model generation device 102. Display device 103 includes display unit 131 and operation receiver 132. Display unit 131 displays the current image, the accumulated-error information, the guide information, and so on. Operation receiver 132 receives user operations. For example, operation receiver 132 is a touch panel, or a keyboard and a mouse. It should be noted that operation receiver 132 may be a microphone or the like that receives a voice operation. Furthermore, display device 103 may include, as means for presenting information to the user, a speaker that performs audio output, a vibrator that transmits vibration to the user, and the like.

It should be noted that imaging device 101, three-dimensional model generation device 102, and display device 103 illustrated in FIG. 1 may be implemented as a single device. Furthermore, the plurality of processing units included in each device may be distributed across a plurality of devices.

For example, in a use case in which a user shoots the subject using a terminal (a smartphone, a tablet terminal, a personal computer, or the like) possessed by the user while moving, imaging device 101, three-dimensional model generation device 102, and display device 103 may be included in the terminal. In another use case, imaging device 101 may be included in a moving body (for example, a vehicle, a robot, a drone, or the like) operated by the user, and three-dimensional model generation device 102 and display device 103 may be included in a terminal possessed by the user. Furthermore, in any case, one or more processing units included in each device may be included in another device such as a server, or the like, connected via a communication network, or the like, to a terminal operated by the user. For example, some or all processing units included in three-dimensional model generation device 102 may be included in a server.

Furthermore, transmission and reception of data between the devices illustrated in FIG. 1 may be performed through an arbitrary method such as wired communication or wireless communication. Furthermore, these communications may be performed directly between devices, or may be performed indirectly via another communication device, a server, or the like. Furthermore, these transmissions and receptions may be transfer of data within a single device.

### [2. Operation]

Next, operation of three-dimensional model generation device 102 will be described. For example, the three-dimensional model generation system generates a three-dimensional model in real time based on images shot by imaging device 101.

FIG. 2 is a flowchart illustrating the operation of three-dimensional model generation device 102. Here, the processing illustrated in FIG. 2 is, for example, repeatedly performed in 1-frame units. It should be noted that the processing illustrated in FIG. 2 may be repeatedly performed in multiple-frame units.

Furthermore, the plurality of images may be a plurality of still images shot while imaging device 101 is moving, or may be a plurality of images included in a video shot while imaging device 101 moves. It should be noted that when a video is used, the plurality of images need not be all the images included in the video, and may be main images (key frames) that are some of the plurality of images included in the video. Here, main images are, for example, images extracted from the plurality of images included in the video at predetermined time intervals.

### [2-1. Estimation of camera position and orientation]

First, obtainer 121 obtains the current image (frame) and a plurality of items of sensor information from imaging device 101 (S101). Next, camera position and orientation estimator 123 generates camera position and orientation information and map information, using a plurality of images including the current image (S102).

It should be noted that the estimation method by which camera position and orientation estimator 123 estimates the position and orientation of imaging device 101 is not particularly limited. For example, camera position and orientation estimator 123 may estimate the position and orientation of imaging device 101 using Visual-SLAM (Simultaneous Localization and Mapping), Structure-From-Motion, Iterative Closest Point (ICP), and the like.

FIG. 3 is a diagram for describing camera position and orientation estimation processing. In FIG. 3, an example in which estimation processing of camera position and orientation is performed using three frames F0, F1, and F2 is illustrated.

As illustrated in FIG. 3, camera position and orientation estimator 123 performs feature point matching processing on the plurality of frames F0 to F2 shot by imaging device 101. Specifically, camera position and orientation estimator 123 extracts feature points from each of the plurality of frames F0 to F2, and extracts a set of similar points (corresponding points) that are similar between the plurality of frames among the extracted plurality of feature points. Next, camera position and orientation estimator 123 estimates the position and orientation of imaging device 101 in each frame using the extracted sets of similar points.

Furthermore, the map information indicates a plurality of map points each of which is a three-dimensional point indicating a three-dimensional position. Camera position and orientation estimator 123 generates the map information by performing triangulation using a result of the feature point matching processing and the camera position and orientation information. It should be noted that the map information may include, in addition to position information, the color of each map point, information indicating the surface shape around the map point (for example, information indicating a normal), and the like. The map information may be corrected to highly accurate information by being further subjected to optimization processing together with the camera positions and orientations.

### [2-2. Generation of three-dimensional model]

Next, three-dimensional model generator 124 generates a three-dimensional model of the subject, based on the plurality of images including the current image and the camera position and orientation information (S103). For example, three-dimensional model generator 124 generates a three-dimensional model using the map information. FIG. 4 is a diagram for describing three-dimensional model generation processing in this case. For example, as illustrated in FIG. 4, three-dimensional model generator 124 generates, as the three-dimensional model, a mesh model represented by planes having the map points as vertices.

It should be noted that the three-dimensional model is not limited to a mesh model and may be any three-dimensional model. For example, the map information may be used directly as the three-dimensional model. Furthermore, when imaging device 101 includes sensor 112, the three-dimensional model may be generated using the sensor information obtained by sensor 112 and the camera position and orientation information. For example, the three-dimensional model may be generated using point cloud data obtained by LiDAR, or a depth image obtained by a distance sensor. Furthermore, a plurality of the map information, the point cloud data, and depth information may be used. For example, the depth information may be estimated from an image using artificial intelligence (AI).

Furthermore, the three-dimensional model may include, in addition to position information, attribute information (information indicating color or a normal), and the like.

### [2-3. Detection of accumulated error]

Next, accumulated error detector 125 detects an accumulated error of the current frame, and displays accumulated-error information indicating the accumulated error on display unit 131 (S104). Here, accumulated error is a difference (error) between a three-dimensional model generated using a past frame and a three-dimensional model generated using the current frame. In other words, the accumulated error is a difference (error) between the estimated camera position and orientation of the current frame and the actual camera position and orientation.

FIG. 5 is a diagram for describing this accumulated error. FIG. 5 illustrates an example in which imaging device 101 shoots a plurality of objects while moving. Furthermore, in this example, imaging device 101 starts shooting and moving from time t0 and returns, at time t = x, to the same position as at time t = 0. Here, in the estimation of the camera position and orientation and the generation of the three-dimensional model, the camera position and orientation of a newly shot image is estimated using the estimated camera position and orientation of a past image, and the three-dimensional model is updated (added). Accordingly, as the number of images used increases (as the shooting time becomes longer), there is a possibility that the positional error between the estimated camera position and orientation and the three-dimensional model, and the actual camera position and orientation and the objects, increases. For example, as illustrated in FIG. 5, as time progresses, the difference (accumulated error) between the actual camera position and orientation (actual trajectory) and the estimated camera position and orientation (estimated trajectory) becomes larger.

Loop closing processing is processing for correcting this accumulated error. By performing the loop closing processing, the estimated camera position and orientation (estimated trajectory) is corrected so as to approach the actual camera position and orientation (actual trajectory). Furthermore, the position information of the three-dimensional model is updated based on the corrected camera position and orientation. For example, using the estimated camera position and orientation of a first image shot in the past (an image at t = 0) and a second image shot at the same position as the first image (an image at t = x), the camera positions and orientations of all images included in a range from t = 0 to t = x are corrected so that the camera position and orientation of the second image becomes the camera position and orientation of the first image. In other words, in order to perform the loop closing processing, an image shot at the same camera position and orientation as one of a plurality of images shot in the past is required.

Hereinafter, an example of accumulated-error information will be described. FIG. 6 is a diagram for describing generation of accumulated-error information. For example, as illustrated in FIG. 6, accumulated-error information is generated by projecting a past three-dimensional model onto a current image. Here, the past three-dimensional model is, for example, a three-dimensional model generated using a plurality of images from t = 0 to x - 1.

FIG. 7 is a diagram illustrating an example display of accumulated-error information. For example, as illustrated in FIG. 7, an image obtained by projecting a past three-dimensional model onto a current image is displayed as the accumulated-error information. Accordingly, the user can determine the necessity of loop closing processing, based on the presence or absence of a difference and the magnitude of the difference between the current image and the image obtained by projecting the past three-dimensional model, which are shown in the image. It should be noted that the projected three-dimensional model may be displayed, for example, in a semi-transparent manner. Alternatively, feature portions such as the contour of a subject may be extracted, and only the feature portions may be displayed.

Furthermore, accumulated error detector 125 may calculate the accumulated error. For example, accumulated error detector 125 calculates, using a first image viewed from a current camera position and orientation based on a current image or a current three-dimensional model, and a second image obtained by viewing a past three-dimensional model from the current camera position and orientation, a difference in pixel values of respective pixels between the first image and the second image. Here, the pixel value is, for example, a depth value, a color value, a normal vector, or the like. The depth value of the first image may be obtained, for example, from the current three-dimensional model, and when sensor information includes a depth image, the current depth image may be used as the first image. Alternatively, a depth image generated using a plurality of images including the current image may be used as the first image. It should be noted that the current three-dimensional model is a three-dimensional model generated from a plurality of images including the current image (for example, images from t = x - 2 to t = x). The depth value of the second image is generated from the past three-dimensional model.

Furthermore, when comparing color values, the first image is the current image, and the second image is, for example, generated from the past three-dimensional model.

The accumulated-error information may include information indicating the difference calculated in this manner. FIG. 8 is a diagram illustrating an example display of accumulated-error information in this case. For example, as illustrated in FIG. 8, a region where a difference exists may be highlighted. Furthermore, in the example illustrated in FIG. 8, the magnitude of the difference is indicated by the shading. It should be noted that the highlighting method is not limited thereto, and any method such as blinking, or the like, may be used. Furthermore, highlighting is not necessarily required as long as a region where a difference exists can be recognized by the user. Furthermore, the number of gradations indicating the magnitude of the difference may be arbitrary. Furthermore, gradation display need not be performed, and the presence or absence of a difference (whether the difference is greater than or equal to a threshold) may be indicated.

Furthermore, although FIG. 8 illustrates a region where a difference exists, an object for which a difference exists may be highlighted. Furthermore, calculation of the difference is not limited to the pixel unit, and may be performed in a region unit which includes a plurality of pixels. In this case, a sum value, an average value, a median value, or a maximum value of differences (or absolute values of the differences) of the plurality of pixels included in the region may be calculated as the difference of the region.

Furthermore, a difference of an entirety of the current image may be calculated as the accumulated error. For example, a sum value, an average value, a median value, or a maximum value of differences of a plurality of pixels may be calculated as the difference of the entirety of an image. Alternatively, a weighted sum value, a weighted average value, or the like, may be used. In this case, for example, a weight may be set larger as a pixel is closer to the center of the image.

Furthermore, a weight may be set according to the accuracy of the three-dimensional model. For example, a weight may be set larger for a region having higher accuracy. This accuracy may be determined, for example, based on a distance between the camera position and the subject of an image used for generating the three-dimensional model. For example, the accuracy may be determined to be higher as the distance is shorter. Alternatively, the accuracy may be determined based on a distance from a detected feature point, a vertex, or an edge. For example, the accuracy may be determined to be higher as the distance is shorter. Furthermore, the accuracy may be determined based on whether a texture exists. For example, the accuracy may be determined to be higher when a texture exists. Furthermore, when a depth image, point cloud data obtained by a laser sensor, or the like, is used for generating the three-dimensional model, the accuracy of the three-dimensional model may be determined based on information indicating the accuracy of the sensor or accuracy of a sensor result included in additional information of sensor information. Furthermore, the accuracy may be determined by combining a plurality of these elements.

Furthermore, in order to facilitate the above determination, when generating the three-dimensional model, information indicating the accuracy of each of the points of the three-dimensional model may be added to the point. Furthermore, information identifying a frame used for generating each of the points of the three-dimensional model may be added to the point.

The accumulated-error information may include information indicating the accumulated error of an entirety of the image calculated in this manner. FIG. 9 is a diagram illustrating an example display of accumulated-error information in this case. For example, as illustrated in FIG. 9, information 201 indicating necessity of loop closing processing may be displayed as information indicating the accumulated error of the entirety of the image. It should be noted that information 201 may indicate the magnitude of the accumulated error instead of the necessity of loop closing processing. Furthermore, although information 201 indicates the degree of necessity of loop closing processing (magnitude of the accumulated error) here, it may indicate whether loop closing processing is necessary (whether an accumulated error exists (or is greater than or equal to a threshold)).

Furthermore, the necessity of loop closing processing may be determined based on, in addition to the accumulated error, the shooting time for which loop closing processing has not been performed (number of images used for generating the three-dimensional model). For example, the necessity of loop closing processing may be determined to be higher as the shooting time is longer.

Furthermore, the method of notifying (presenting to) the user whether loop closing processing is necessary (or the degree of the necessity) is not limited thereto, and any display method such as causing a screen frame to change color or blink may be used. Furthermore, aside from displaying, other notification methods, such as sound or vibration, may be used. Furthermore, a plurality of these methods may be combined.

It should be noted that, although an example in which a past three-dimensional model is projected onto a current image as the accumulated-error information has been described above, a current three-dimensional model and a past three-dimensional model may be displayed as the accumulated-error information. FIG. 10 is a diagram illustrating an example display of accumulated-error information in this case. For example, the current three-dimensional model and the past three-dimensional model may be displayed in different colors. Furthermore, although in FIG. 10, only a past three-dimensional model corresponding to the current three-dimensional model is displayed, the entirety of three-dimensional models including a three-dimensional model of a subject not included in the current image may be displayed as the past three-dimensional model. In this case, the color, or the like, of the past three-dimensional model may be changed according to the distance from the current three-dimensional model.

Furthermore, the viewpoint of the displayed three-dimensional model may be changeable. For example, as illustrated in FIG. 10, user interface 202 for changing (translating, rotating, and scaling) the viewpoint of the displayed current three-dimensional model and past three-dimensional model may be displayed. It should be noted that user interface 202 need not necessarily be displayed, and the viewpoint may be changed by a predetermined operation (drag, flick, pinch-in, pinch-out, and so on) on a touch panel.

Furthermore, the accumulated-error information illustrated in FIG. 10 may be displayed instead of the accumulated-error information illustrated in FIG. 7 and so on, or both may be displayed simultaneously by screen division and so on, or either one may be selectively displayed according to a user operation. Furthermore, the difference may be displayed as in the example illustrated in FIG. 8, or information indicating necessity of loop closing processing (magnitude of the accumulated error) and so on, may be displayed as in FIG. 9.

Furthermore, in FIG. 10, positional alignment between the current three-dimensional model and the past three-dimensional model may be manually performed. That is, an operation for aligning positions of the current three-dimensional model and the past three-dimensional model may be input by the user. Furthermore, information based on this manual input operation may be used as auxiliary information for loop closing processing. For example, by this operation, a direction and an amount of misalignment between the current three-dimensional model and the past three-dimensional model are obtained. By using at least one of the direction or the amount of the misalignment for setting an initial value of a search in matching processing in loop closing processing, the amount of processing can be reduced and accuracy can be improved.

Furthermore, although a method of comparing pixel values of each pixel between a first image viewed from a current camera position and orientation based on a current image or a current three-dimensional model, and a second image obtained by viewing a past three-dimensional model from the current camera position and orientation has been described above as a method of calculating the accumulated error, another method may be used. For example, accumulated error detector 125 may detect corresponding points, which are corresponding feature points, between the current three-dimensional model and the past three-dimensional model, and calculate the accumulated error based on distances between the corresponding points. In this case, the accumulated error may be calculated in any of a point unit, a region unit including a plurality of points, or an image unit. For example, as the accumulated error in the region or image unit, a sum value, an average value, a median value, a maximum value, a weighted sum value, a weighted average value, and so on, of a plurality of differences of a plurality of corresponding points included in the region or the image may be used. It should be noted that weights can be set, for example, in the same manner as described above.

Furthermore, instead of detecting corresponding points between the three-dimensional models, corresponding points may be detected between the current image and an image obtained by viewing the past three-dimensional model from the current camera position and orientation.

### [2-4. Determination of whether to perform loop closing processing]

As illustrated in FIG. 2, next, accumulated error detector 125 determines whether to execute loop closing processing (S105). It should be noted that the determination here is not a determination of whether to immediately perform loop closing processing, but a determination of whether to display guide information for shooting a correction image used for loop closing processing described later.

For example, accumulated error detector 125 displays, together with the accumulated-error information, a user interface for a user to instruct execution of loop closing processing. FIG. 11 is a diagram illustrating an example display of this user interface 203. When the user instructs execution of loop closing processing via user interface 203, accumulated error detector 125 determines that loop closing processing is to be performed (Yes in S105), and, when the user does not instruct execution, determines that loop closing processing is not to be executed (No in S105).

It should be noted that the method by which the user instructs execution of loop closing processing is not limited to the above, and any method may be used.

Furthermore, user interface 203 need not always be displayed, and user interface 203 may be displayed when the calculated accumulated error (necessity of loop closing processing) is greater than or equal to a predetermined threshold, and need not be displayed otherwise.

When it is determined that loop closing processing is not to be executed (No in S105), processing from step S101 onward is performed for the next image.

### [2-5. Generation of guide information]

On the other hand, when it is determined that loop closing processing is to be executed (Yes in S105), user guide 126 selects a target image (S106). Here, the target image is an image included in past images, and is an image for determining a camera position and orientation of a correction image to be shot. For example, a camera position and orientation of the target image is determined as a camera position and orientation of the correction image. It should be noted that the camera position and orientation of the correction image need not be completely the same as the camera position and orientation of the target image. For example, it is sufficient that the difference between the camera position and orientation of the correction image and the camera position and orientation of the target image is within a predetermined range.

First, user guide 126 selects a plurality of candidate images from a plurality of past images. For example, user guide 126 selects a plurality of candidate images from a plurality of images used for generating a past three-dimensional model (that is, a three-dimensional model corresponding to a subject in the current image) projected onto the current image when calculating the accumulated error. It should be noted that the plurality of candidate images may be selected from a plurality of images related to the plurality of images used for generating the past three-dimensional model. Here, the related images are, for example, images having a camera position and orientation close to the camera position and orientation of the plurality of images used for generating the past three-dimensional model.

Specifically, user guide 126 preferentially selects images having a camera position and orientation close to the estimated current camera position and orientation. Alternatively, user guide 126 preferentially selects images having many feature points. It should be noted that, in addition to the number of feature points, user guide 126 may determine a degree of dispersion (degree of variance) of the feature points, and may preferentially select images having a high degree of dispersion. Alternatively, user guide 126 may preferentially select images in which the projected past three-dimensional model appears at the center. It should be noted that user guide 126 may use any one of these plurality of determination criteria, or may use a combination of two or more determination criteria.

It should be noted that the feature points described above are, for example, points detected by feature analysis from the three-dimensional model. Alternatively, the feature points described above are points detected by feature analysis from a two-dimensional image. Alternatively, the feature points described above are points in a three-dimensional model which correspond to points detected by feature analysis from a two-dimensional image.

Next, user guide 126 displays a user interface for the user to select a target image from the selected plurality of candidate images. FIG. 12 is a diagram illustrating an example display of this user interface 205. The target image is determined by the user selecting a target image from the displayed plurality of candidate images 206. It should be noted that the method by which the user selects the target image is not limited thereto.

FIG. 13 is a diagram illustrating another example display a user interface for the user to select a target image from the plurality of candidate images. User interface 207 illustrated in FIG. 13 displays a past three-dimensional model, the camera position and orientation of the current image, and the camera positions and orientations of the plurality of candidate images. In this case, the target image is determined by the user selecting any one of the camera positions and orientations of the plurality of candidate images. It should be noted that user interface 207 illustrated in FIG. 13 may be used instead of user interface 205 illustrated in FIG. 12, or both may be displayed simultaneously.

Furthermore, instead of the user selecting the target image, user guide 126 may select the target image from the plurality of images. In this case, for example, user guide 126 selects, as the target image, an image having a highest priority in the above-described candidate image selection method.

Next, user guide 126 generates guide information for the user to shoot the target image, and displays the generated guide information (S107). Here, the guide information is information for assisting the shooting of a correction image by the user, and is information for guiding the camera position and orientation of camera 111 to the camera position and orientation of the correction image (that is, the camera position and orientation of the target image).

FIG. 14 is a diagram illustrating an example of guide information. For example, as illustrated in FIG. 14, the target image is displayed superimposed on the current image as the guide information. For example, a semi-transparent target image is superimposed on the current image. Accordingly, the user can shoot a correction image having the same camera position and orientation as the target image by shooting in a state in which the current image overlaps the target image. Alternatively, only feature portions such as the contour of a subject in the target image may be extracted, and only the feature portions may be superimposed on the current image.

Furthermore, the guide information displays information 208 instructing the user to move to the camera position of the target image (the camera position of the correction image). It should be noted that the guide information may include an instruction to match the camera orientation to the camera orientation of the target image (for example, "please point the camera upward", and so on). It should be noted that it is acceptable that only one of superimposing the target image on the current image or displaying information 208 is performed.

It should be noted that, although an example in which the target image is superimposed on the current image is described here, the current image and the target image may be displayed separately. Furthermore, in this case, a plurality of target images may be displayed. For example, the plurality of target images may include the plurality of candidate images or a part thereof.

FIG. 15 is a diagram illustrating another example of guide information. Guide information 209 illustrated in FIG. 15 includes a three-dimensional model, the camera position and orientation of the current image, the camera position and orientation of the target image (camera position and orientation of the correction image), and information 210 instructing the user to move to the camera position of the target image. It should be noted that guide information 209 illustrated in FIG. 15 may be used instead of the guide information illustrated in FIG. 14, or both may be displayed simultaneously.

When the correction image is shot (Yes in S108), loop closing processing is performed (S109). Specifically, camera position and orientation estimator 123 corrects the camera position and orientation information and map information of a series of images (for example, images from t = 0 to t = x illustrated in FIG. 5) using the correction image. Three-dimensional model generator 124 corrects the three-dimensional model by re-generating the three-dimensional model using the corrected camera position and orientation information and map information. Furthermore, the camera position and orientation information, the map information, and the three-dimensional model after correction are stored in storage 122 as information generated from the series of images.

It should be noted that, in a period up to when the correction image is shot (No in S108), although illustration is omitted in FIG. 2, at least part of processing in steps S101 to S104 is performed as necessary, and the guide information is updated to content based on the current image (S107).

Furthermore, although in the foregoing description, three-dimensional model generation device 102 determines whether the correction image has been shot and performs loop closing processing when the correction image has been shot, three-dimensional model generation device 102 may determine whether an image having the same (or similar) camera position and orientation as any of a plurality of past images has been shot, and may perform loop closing processing when such an image has been shot.

Alternatively, three-dimensional model generation device 102 may perform loop closing processing when the correction image has been shot, and need not perform loop closing processing when an image having the same (or similar) camera position and orientation as any of the plurality of past images other than the target image has been shot. In other words, three-dimensional model generation device 102 may determine whether to perform loop closing processing only with regard to the target image among the plurality of past images. Accordingly, the amount of processing can be reduced and occurrence of unnecessary loop closing processing can be reduced.

### [3. Conclusion]

As described above, a three-dimensional model generation device (for example, three-dimensional model generation device 102) according to the present embodiment performs processing illustrated in FIG. 16. FIG. 16 is a flowchart of three-dimensional model generation processing performed by the three-dimensional model generation device according to the present embodiment. FIG. 17 is a block diagram illustrating a hardware configuration of three-dimensional model generation device 102. For example, three-dimensional model generation device 102 includes circuitry 11 and memory 12. Circuitry 11 is coupled to memory 12, and performs the following processing using memory 12.

First, the three-dimensional model generation device obtains a plurality of images that are consecutive (S201), and generates, using the plurality of images, a three-dimensional model including a plurality of three-dimensional points each having position information (S202). The three-dimensional model generation device determines whether to perform correction (for example, loop closing processing) of an accumulated error of the three-dimensional model (S203). For example, the three-dimensional model generation device determines whether to cause a display unit (for example, display unit 131) to display first information (for example, guide information) for instructing a first position and orientation for shooting a first image (for example, a correction image) for performing correction of an accumulated error of the three-dimensional model. When determining to perform the correction (Yes in S203), the three-dimensional model generation device causes the display unit (for example, display unit 131) to display the first information (for example, the guide information) for instructing the first position and orientation for shooting the first image (for example, the correction image) for performing the correction (S204). That is, when determining to cause the display unit to display the first information, three-dimensional model generation device causes the display unit to display the first information.

Accordingly, the three-dimensional model generation device can support shooting of the first image for correcting the accumulated error. Therefore, accuracy of the generated three-dimensional model can be improved by appropriately performing the correction processing. In this manner, the three-dimensional model generation device can achieve further improvement.

For example, the first information is a second image (for example, a target image) included in the plurality of images and shot at the first position and orientation. Accordingly, the user can determine the first position and orientation while referring to the second image.

For example, circuitry 11 causes the display unit to display the second image superimposed on a currently shot image (for example, FIG. 14). Accordingly, the user can shoot the first image by shooting in a state in which the currently shot image matches the second image.

For example, circuitry 11 further causes the display unit to display second information (for example, accumulated error information) indicating the accumulated error. Accordingly, the user can determine whether to perform the correction of the accumulated error, by referring to the second information.

For example, as the second information, circuitry 11 causes the display unit to display, superimposed on a currently shot image, a third image obtained by viewing the three-dimensional model from a current position and orientation (for example, FIG. 7). Accordingly, the user can recognize a difference between the currently shot image and the third image. Furthermore, the user can determine the necessity of the correction of the accumulated error, based on the difference.

For example, circuitry 11 further causes the display unit to display, as the second information, a region having a difference between the third image and the currently shot image (for example, FIG. 8). Accordingly, the user can determine the necessity of the correction of the accumulated error, based on the third information.

For example, circuitry 11 further: calculates an amount of the accumulated error, based on a difference between the third image and the currently shot image; and causes the display unit to display third information indicating the amount calculated (for example, FIG. 9). Accordingly, the user can recognize the magnitude (degree) of the difference between the currently shot image and the third image. Furthermore, the user can determine the necessity of the correction of the accumulated error, based on the magnitude of the difference.

For example, circuitry 11 further: causes the display unit to display, together with the second information, a user interface for a user to instruct whether to perform the correction (for example, FIG. 11), and when an instruction to perform the correction is received, causes the display unit to display the first information. Accordingly, the correction can be performed based on a determination by the user referring to the second information.

For example, circuitry 11 further causes the display unit to display a user interface for a user to select the second image from a plurality of fourth images included in the plurality of images (for example, FIG. 12). Accordingly, the second image can be selected by the user.

For example, circuitry 11 further selects the plurality of fourth images from the plurality of images, based on feature points included in each of the plurality of images. Accordingly, the accuracy of feature point matching for the second image can be improved, and thus the accuracy of the correction of the accumulated error can be improved.

For example, circuitry 11 further selects the second image from the plurality of images, based on feature points included in each of the plurality of images. Accordingly, the accuracy of feature point matching for the second image can be improved, and thus the accuracy of the correction of the accumulated error can be improved.

For example, in a case where the first information is displayed on display unit: (1) when the first image shot from the first position and orientation is obtained, the correction is performed using the first image obtained; and (2) when a sixth image shot from a position and orientation of a fifth image shot at a position and orientation other than the first position and orientation, among the plurality of images, is obtained, the correction is not performed using the sixth image obtained. Accordingly, correction using an inappropriate image can be suppressed.

For example, circuitry 11: estimates, using the plurality of images, estimated positions and orientations, which are positions and orientations at which the plurality of images were shot, and generates the three-dimensional model using the estimated positions and orientations; and in the correction, corrects the accumulated error, based on an error between an estimated position and orientation of the first image and an estimated position and orientation of the second image that is included in the plurality of images and shot at the first position and orientation.

For example, circuit 11 causes the display unit to display, as the second information, a current three-dimensional model and a past three-dimensional model (for example, FIG. 10). Circuitry 11 further: receives an operation for aligning positions of the current three-dimensional model and the past three-dimensional model; and in the correction, performs the correction using, as auxiliary information, information obtained through the operation for aligning positions. Accordingly, it is possible to reduce the amount of processing for the correction of the accumulated error and improve accuracy.

For example, a three-dimensional model generation device includes memory and circuitry connected to the memory. Using the memory, the circuitry: obtains a plurality of images that are consecutive; generates, using the plurality of images, a three-dimensional model including a plurality of three-dimensional points each having position information; selects, from the plurality of images, a first image, which is one of two images shot at a same position and orientation for correcting an accumulated error of the three-dimensional model; and in selecting the first image, selects the first image from the plurality of images, based on feature points included in each of the plurality of images.

For example, the circuitry selects, from the plurality of images, a plurality of second images including the first image, based on the feature points.

For example, the circuitry selects the first image from the plurality of images, based on a total number of the feature points. For example, the circuitry preferentially selects an image having a large number of the feature points as the first image. For example, the circuitry selects the first image from the plurality of images, based on a degree of dispersion (degree of variance) of the feature points. For example, the circuitry preferentially selects an image having a high degree of dispersion of the feature points as the first image.

For example, the feature points are points detected by feature analysis from the first three-dimensional model. For example, the feature points are points detected by feature analysis from the plurality of images. Alternatively, the feature points described above are points in a three-dimensional model which correspond to points detected by feature analysis from a two-dimensional image.

Although a three-dimensional model generation system, a three-dimensional model generation device, and the like, according to embodiments of the present disclosure have been described above, the present disclosure is not limited to these embodiments.

Furthermore, each of the processing units included in the three-dimensional model generation device, and the like, according to the above embodiments is typically implemented as an LSI circuit, which is an integrated circuit. These may take the form of individual chips, or may be partially or entirely packaged into a single chip.

Furthermore, circuit integration is not limited to an LSI, and thus may be implemented as a dedicated circuit or a general-purpose processor. A field programmable gate array (FPGA) that allows for programming after the manufacture of an LSI, or a reconfigurable processor that allows for reconfiguration of the connection and the setting of circuit cells inside an LSI may be employed.

Moreover, in the above embodiments, the elements may be implemented as dedicated hardware or may be realized by executing a software program suited to such elements. Alternatively, the elements may be implemented by a program executor such as a CPU or a processor reading out and executing the software program recorded on a recording medium such as a hard disk or a semiconductor memory.

Furthermore, the present disclosure may be realized as a three-dimensional model generation method, and the like, that is to be executed by a three-dimensional model generation system or a three-dimensional model generation device.

Furthermore, the divisions of the functional blocks shown in the block diagrams are mere examples, and thus a plurality of functional blocks may be implemented as a single functional block, or a single functional block may be divided into a plurality of functional blocks, or one or more functions may be moved to another functional block. Moreover, the functions of a plurality of functional blocks having similar functions may be processed by single hardware or software in a parallelized or time-divided manner.

Furthermore, the order of executing the steps shown in the flowcharts is a mere illustration for specifically describing the present disclosure, and thus may be an order other than the shown order. Moreover, one or more of the steps may be executed simultaneously (in parallel) with another step.

Although a three-dimensional model generation system, a three-dimensional model generation device, and the like, according to one or more aspects have been described above based on the embodiments, the present disclosure is not limited to these embodiments. The one or more aspects may thus include forms achieved by making various modifications to the above embodiments that can be conceived by those skilled in the art, as well forms achieved by combining elements in different embodiments, without materially departing from the spirit of the present disclosure.

### [Industrial Applicability]

The present disclosure is applicable to a three-dimensional model generation system, a three-dimensional model generation device, and the like.

### [Reference Signs List]

- 11: circuitry
- 12: memory
- 101: imaging device
- 102: three-dimensional model generation device
- 103: display device
- 111: camera
- 112: sensor
- 121: obtainer
- 122: storage
- 123: camera position and orientation estimator
- 124: three-dimensional model generator
- 125: accumulated error detector
- 126: user guide
- 127: outputter
- 128: controller
- 131: display unit
- 132: operation receiver
- 201, 208, 210: information
- 202, 203, 205, 207: user interface
- 206: candidate image
- 209: guide information

## Claims

1. A three-dimensional model generation device comprising:
memory; and
circuitry coupled to the memory, wherein
using the memory, the circuitry:
obtains a plurality of images that are consecutive;
generates, using the plurality of images, a three-dimensional model including a plurality of three-dimensional points each having position information;
determines whether to cause a display unit to display first information for instructing a first position and orientation for shooting a first image for performing correction of an accumulated error of the three-dimensional model; and
when determining to cause the display unit to display the first information, causes the display unit to display the first information.

2. The three-dimensional model generation device according to claim 1, wherein
the first information is a second image that is included in the plurality of images and shot at the first position and orientation.

3. The three-dimensional model generation device according to claim 2, wherein
the circuitry causes the display unit to display the second image superimposed on a currently shot image.

4. The three-dimensional model generation device according to claim 1, wherein
the circuitry further causes the display unit to display second information indicating the accumulated error.

5. The three-dimensional model generation device according to claim 4, wherein
as the second information, the circuitry causes the display unit to display, superimposed on a currently shot image, a third image obtained by viewing the three-dimensional model from a current position and orientation.

6. The three-dimensional model generation device according to claim 5, wherein
the circuitry further causes the display unit to display, as the second information, a region having a difference between the third image and the currently shot image.

7. The three-dimensional model generation device according to claim 5, wherein
the circuitry further:
calculates an amount of the accumulated error, based on a difference between the third image and the currently shot image; and
causes the display unit to display third information indicating the amount calculated.

8. The three-dimensional model generation device according to claim 4, wherein
the circuitry further:
causes the display unit to display, together with the second information, a user interface for a user to instruct whether to perform the correction; and
when an instruction to perform the correction is received, causes the display unit to display the first information.

9. The three-dimensional model generation device according to claim 2, wherein
the circuitry further causes the display unit to display a user interface for a user to select the second image from a plurality of fourth images included in the plurality of images.

10. The three-dimensional model generation device according to claim 9, wherein
the circuitry further selects the plurality of fourth images from the plurality of images, based on feature points included in each of the plurality of images.

11. The three-dimensional model generation device according to claim 2, wherein
the circuitry further selects the second image from the plurality of images, based on feature points included in each of the plurality of images.

12. The three-dimensional model generation device according to claim 1, wherein
in a case where the first information is displayed on the display unit:
(1) when the first image shot from the first position and orientation is obtained, the correction is performed using the first image obtained; and
(2) when a sixth image shot from a position and orientation of a fifth image shot at a position and orientation other than the first position and orientation, among the plurality of images, is obtained, the correction is not performed using the sixth image obtained.

13. The three-dimensional model generation device according to claim 1, wherein
the circuitry:
estimates, using the plurality of images, estimated positions and orientations that are positions and orientations at which the plurality of images were shot, and generates the three-dimensional model using the estimated positions and orientations; and
in the correction, corrects the accumulated error, based on an error between an estimated position and orientation of the first image and an estimated position and orientation of a second image that is included in the plurality of images and shot at the first position and orientation.

14. The three-dimensional model generation device according to claim 4, wherein
the circuitry causes the display unit to display, as the second information, a current three-dimensional model and a past three-dimensional model,
the circuitry further:
receives an operation for aligning positions of the current three-dimensional model and the past three-dimensional model; and
in the correction, performs the correction using, as auxiliary information, information obtained through the operation for aligning the positions.

15. A three-dimensional model generation method comprising:
obtaining a plurality of images that are consecutive;
generating, using the plurality of images, a three-dimensional model including a plurality of three-dimensional points each having position information;
determining whether to cause a display unit to display first information for instructing a first position and orientation for shooting a first image for performing correction of an accumulated error of the three-dimensional model; and
when determining to cause the display unit to display the first information, causing the display unit to display the first information.

16. A program for causing a computer to execute the three-dimensional model generation method according to claim 15.
